# EUROPÄISCHE PATENTSCHRIFT

(11) **EP 3 941 798 B1**
(45) Veröffentlichungstag und Bekanntmachung des Hinweises auf die Patenterteilung: **30.08.2023**
(21) Anmeldenummer: 20711771.4
(22) Anmeldetag: 27.02.2020
(51) Int. Cl.: B61L 27/00, E01B 2/00, E01B 3/28, E01B 35/00

(54) **EISENBAHNFAHRWEG**
RAILWAY TRACK
VOIE FERRÉE

(30) Priorität: 22.03.2019 AT 1092019
(43) Veröffentlichungstag der Anmeldung: 26.01.2022
(73) Patentinhaber: Getzner Werkstoffe Holding GmbH, 6706 Bürs (AT)
(72) Erfinder: SEHNER, Michael, 6800 Feldkirch (AT); LOY, Harald, 6780 Schruns (AT)
(74) Vertreter: Torggler & Hofmann Patentanwälte - Rankweil
(86) Internationale Anmeldenummer: PCT/AT2020/000005
(87) Internationale Veröffentlichungsnummer: WO 2020/191418

(56) Entgegenhaltungen:
- WO-A1-00/73118
- WO-A2-2012/131683
- CN-U- 201 901 829
- JP-A- 2008 224 564

## Beschreibung

Die vorliegende Erfindung betrifft einen Eisenbahnfahrweg gemäß des Oberbegriffs des Patentanspruchs 1.

Beim Stand der Technik ist es z.B. aus der WO 00/23770 A1 bekannt, unterhalb von Eisenbahnschienen Messvorrichtungen zur Messung von vertikaler Flächenpressung vorzusehen. In der WO 00/23770 wird hierzu je eine Wägezelle in unterhalb der Eisenbahnschienen angeordneten Schwellen eingebaut. Derartige beim Stand der Technik bekannte Gleiswaagen dienen zum Wiegen von Eisenbahnwaggons während des Überfahrens der Wägestrecke.

Die JP 2008 22 4564A zeigt einen Eisenbahnfahrweg der eingangs genannten Art, bei dem die Messvorrichtung mit einer Aluminiumplatte auf dem Schotterbett aufliegt und zwischen dieser Aluminiumplatte und den Messsensoren eine Korkplatte angeordnet ist.

Aufgabe der Erfindung ist es, einen Eisenbahnfahrweg der oben genannten Art dahingehend weiter zu entwickeln, dass der Zustand des Eisenbahnfahrwegs unterhalb der Eisenbahnschiene besser messtechnisch erfasst werden kann.

Hierzu sieht die Erfindung einen Eisenbahnfahrweg gemäß Patentanspruch 1 vor.

Im Gegensatz zum oben genannten Stand der Technik in Form der WO 00/23770 A1, bei dem die Messvorrichtungen einen einzigen Messwert für die vertikale Flächenpressung liefert, erlaubt es die Vielzahl der bei der erfindungsgemäß vorgesehenen Messvorrichtung im oder am Trägerkörper angeordneten Messsensoren auch eine Vielzahl von räumlich verteilt angeordneten Messwerten gleichzeitig zur Verfügung zu stellen, indem jeder der Messsensoren an seiner Position die vertikale Flächenpressung misst.

Auf diese Art und Weise können die Verteilung der vertikalen Flächenpressungen in der Fläche und auch deren Änderungen z.B. über den Verlauf der Zeit bestimmt werden. Dies kann z.B. dazu benutzt werden, die Verteilung von Kontaktpunkten und deren Größe und Lage messtechnisch zu erfassen und/oder auch mit der Zeit durch Belastungen und/oder Setzungen auftretende Änderungen im Eisenbahnfahrweg unterhalb der Eisenbahnschiene festzustellen und/oder zu überwachen.

Darüber hinaus kann anhand von erfindungsgemäßen Eisenbahnfahrwegen gezielt die Wirkung der Einbringung von elastomeren Zwischenschichten wie z.B. Schwellensohlen, Zwischenlagen, Zwischenplatten und/oder Unterschottermatten untersucht und messtechnisch erfasst werden.

Die Messsensoren sind hierzu günstigerweise flächig verteilt im mattenförmigen oder plattenförmigen Trägerkörper angeordnet. Besonders bevorzugt ist vorgesehen, dass die einzelnen Messsensoren in Horizontalrichtung voneinander distanziert im mattenförmigen oder plattenförmigen Trägerkörper der Messvorrichtung angeordnet sind. Allgemein gesprochen ist es unter Verwendung erfindungsgemäßer Eisenbahnfahrwege möglich, ein Verfahren durchzuführen, bei dem die Verteilung der vertikalen Flächenpressung in der Fläche - oder in anderen Worten die räumliche Verteilung der vertikalen Flächenpressung - unterhalb der Eisenbahnschiene, insbesondere in Abhängigkeit der Zeit, gemessen werden. Somit können auch deren Änderungen gemessen bzw. erfasst werden.

Erfindungsgemäße Eisenbahnfahrwege können auch als Gleisanlage oder Gleis bezeichnet werden. Erfindungsgemäße Eisenbahnfahrwege können als Kreuzungsbereiche oder Weichen ausgebildet sein oder diese mit umfassen. Bei erfindungsgemäßen Eisenbahnfahrwegen kann es sich aber auch im einfachsten Fall um einen geraden oder um die Kurve verlaufenden Abschnitt mit nur zwei Eisenbahnschienen handeln.

Die vertikale Flächenpressung wird, wie allgemein bekannt, als vertikal auf eine Fläche einwirkende Kraft, also als Kraft pro Fläche, bestimmt und z.B. in der Einheit N/mm² (Newton pro Quadratmillimeter) angegeben.

Der Trägerkörper der Messvorrichtung verbindet die einzelnen Messsensoren miteinander. Bei mattenförmigen Trägerkörpern sind die Trägerkörper in sich flexibel. Z.B. kann eine Trägerfolie als mattenförmiger Trägerkörper verwendet werden. Bei plattenförmigen Trägerkörpern sind die Trägerkörper in sich steif also als Platte ausgebildet. In beiden Fällen sind die Trägerkörper aber natürlich so ausgelegt, dass die an ihnen angebrachten bzw. fixierten Messsensoren die vertikale Flächenpressung an der jeweiligen Position des Messsensors auch messen können.

In bevorzugten Varianten der Erfindung ist oberhalb und/oder unterhalb des Trägerkörpers und der Messsensoren zumindest eine Gleitschicht der Messvorrichtung zur Entkopplung von horizontalen Kräften bei der Messung der vertikalen Flächenpressung angeordnet. Günstigerweise ist diese Gleitschicht direkt unterhalb und/oder oberhalb des Trägerkörpers und der Messsensoren angeordnet. Die Gleitschicht sorgt dafür, dass horizontale Querkräfte bei der Messung entkoppelt, also nicht von den Messsensoren erfasst werden und diese auch nicht beeinträchtigen. Die Gleitschicht sorgt also dafür, dass die Messsensoren nur die vertikale Flächenpressung und keine horizontalen Querkräfte messen. Günstigerweise ist dabei vorgesehen, dass ein Reibungskoeffizient zwischen einem jeweiligen der Messsensoren und der Gleitschicht 0,5 oder kleiner ist. Vorzugsweise ist dieser Reibungskoeffizient 0,1 oder kleiner. Die Gleitschicht stellt somit einen Schutz der Messsensoren gegen Schubkräfte, also gegen in Horizontalrichtung wirkende Kräfte bzw. Kraftkomponenten dar. Die Gleitschicht kann insbesondere als eine Hülle ausgeführt sein, die oberhalb und unterhalb des Trägerkörpers und der Messsensoren angeordnet ist. Der Trägerkörper und die Messsensoren können vollkommen in einer solchen als Hülle ausgeführten Gleitschicht eingefasst sein. Die Gleitschicht sollte so ausgeführt sein, dass durch die zu erwartenden vertikalen Flächenpressungen keine Beschädigung der Gleitschicht entstehen kann. Die Gleitschicht kann z.B. als eine Folie ausgeführt sein. Bei zu erwartenden vertikalen Flächenpressungen von 5 N/mm² oder mehr, kann es sich z.B. um eine gewebeverstärkte Folie handeln. Die Gleitschicht kann insbesondere aus PTFE, also aus Polytetrafluorethylen bestehen oder ein solches Material zumindest aufweisen. Polytetrafluorethylen ist auch unter dem Handelsnamen Teflon bekannt. Die Gleitschicht kann auch als Abdichtung des Trägerkörpers und der Messsensoren und somit als Schutz vor Feuchtigkeitseintrag von außen verwendet werden, wenn sie entsprechend in sich geschlossen ausgeführt ist. Die Schichtdicke der Gleitschicht liegt bevorzugt im Bereich von 0,1mm bis 10mm, besonders bevorzugt von 0,15mm bis 0,3mm. Die Gleitschicht kann nach außen, also auf ihren vom Trägerkörper abgewandten Seiten an weiteren Schichten der Messvorrichtung befestigt, z.B. angeklebt aber auch gegenüber diesen lose eingelegt sein.

Bei der Erfindung ist vorgesehen, dass die Messvorrichtung auf zumindest einer Seite des Trägerkörpers von einer die Messvorrichtung nach außen abschließenden Schutzplatte begrenzt ist. Bevorzugt befindet sich auf beiden, einander gegenüberliegenden Seiten des Trägerkörpers jeweils eine Schutzplatte. In diesem Sinn ist günstigerweise vorgesehen, dass die Messvorrichtung auf zwei einander gegenüberliegenden Seiten des Trägerkörpers von jeweils einer die Messvorrichtung nach außen abschließenden Schutzplatte begrenzt ist. Die zumindest eine der Schutzplatten ist mehrschichtig ausgeführt.

Eine dieser Schutzplatten kann z.B. eine Basis bilden, gegenüber der die vertikalen Flächenpressungen gemessen werden. Die vertikalen Flächenpressungen werden in diesem Fall in der Regel auf der, dieser als Basis dienenden Schutzplatte gegenüberliegenden Seite in die Messvorrichtung eingetragen. Bietet jedoch der Körper, an dem die Messvorrichtung anliegt, eine ausreichend ebene Basisfläche und wird auch ansonsten kein Schutz vor mechanischer Beeinträchtigung oder Feuchtigkeit auf dieser Seite benötigt, so kann auf diese Schutzplatte, welche als Basis dient, auch verzichtet werden. Die Schutzplatte, welche als Basis dient, kann aus Metallblech wie z.B. Stahl gefertigt sein. Es kann sich hierbei z.B. um einen festen Baustahl handeln. Die Dicke dieser Schutzplatte liegt günstigerweise im Bereich zwischen 0,1mm und 20mm, vorzugsweise im Bereich von 2mm bis 3mm. Eine Schutzplatte ist aber auch auf der Seite der Messvorrichtung ausgebildet, auf der die zu messenden vertikalen Flächenpressungen in die Messvorrichtung eingetragen werden. Die Schutzplatte dient als Schutzschicht dazu, den Trägerkörper und die auf ihm angeordneten Messsensoren sowie die gegebenenfalls vorhandene Gleitschicht vor zu großen Kräften, also vor Überlast oder Zerstörung zu schützen. Diese Schutzplatte besteht aus mehreren Schichten mit unterschiedlichen Materialeigenschaften. Diese Schutzplatte ist also in Sandwichbauweise ausgeführt. Es ist vorgesehen, dass bei dieser Schutzplatte ein fester Stahl der Seite zugewandt ist, auf der die vertikalen Flächenpressungen in die Messvorrichtung eingetragen werden und die Schutzplatte weiters eine Schicht aus einem weicheren duktilen Metall wie z.B. Kupfer aufweist, welche dem Trägerkörper zugewandt ist. Diese weichere duktile Schicht ermöglicht eine Lastverteilung und verhindert auch die Perforation der Gleitschicht. Bei dem Stahl der mehrschichtigen Schutzplatte, welcher der Seite zugewandt ist, auf der die vertikalen Flächenpressungen in die Messvorrichtung eingetragen werden, kann man auch von einer Schicht aus Stahl sprechen. Die Begriffe des festen Stahls und des weicheren duktilen Metalls sind in Relation zu sehen. Diese besagen letztendlich nichts anderes, als dass der Stahl bzw. die Schicht aus Stahl in der mehrschichtigen Schutzplatte fester als die dazu in Relation weichere Schicht aus duktilem Metall ist. Die Schutzplatte kann in diesem Fall z.B. eine Dicke zwischen 0,3mm bis 3mm, vorzugsweise 0,3mm bis 1,5mm, aufweisen. Einzelne Schichten dieser Schutzplatte haben im Fall eines Sandwich- bzw. mehrschichtigen Aufbaus günstigerweise Dicken von 0,1mm bis 3mm, vorzugsweise von 0,3mm bis 1mm. Bei einer zweischichtigen Platte aus Stahl und Kupfer beträgt die Mindestdicke der Kupferschicht vorzugsweise zumindest 0,4mm und die des Stahls vorzugsweise zumindest 0,3mm. Für Anwendungen unterhalb einer Schotterschicht, wie sie nachfolgend noch im Detail gezeigt werden, können die Dicken der Schutzplatte gegenüber den obigen Angaben auch halbiert werden, wobei die Gesamtdicke aber typischerweise nicht unter 0,3mm liegt. Für Anwendungen, bei denen die Messvorrichtung zwischen der Eisenbahnschiene und einer Eisenbahnschwelle angeordnet ist, kann die Dicke der Schutzplatten bis auf 0,15mm reduziert werden. Anstelle von Kupfer könne auch andere duktile, gut verformbare und gut zu bearbeitende Materialien und insbesondere Metalle wie z.B. Metalle mit kubisch flächenzentrierter Kristallstruktur verwendet werden.

Sofern sowohl Gleitschicht als auch Schutzplatte vorhanden sind, ist günstigerweise vorgesehen, dass die Gleitschicht, vorzugsweise jeweils, zwischen dem Trägerkörper mit den Messsensoren und der Schutzplatte angeordnet ist.

Bei Eisenbahnfahrwegen, bei denen die Messvorrichtung Gefahr läuft, mechanisch beeinträchtigt zu werden, ist günstigerweise vorgesehen, dass die Messvorrichtung einen um die Schutzplatte, vorzugsweise die Schutzplatten, und den Trägerkörper randlich umlaufenden Schutzrahmen aufweist, welcher Stirnflächen der Schutzplatte, vorzugsweise der Schutzplatten, und des Trägerkörpers nach außen hin abdeckt. Dies bietet sich insbesondere dann an, wenn die Messvorrichtung z.B. unterhalb einer Eisenbahnschwelle in einem Schotterbett liegt. In diesem Fall verhindert der Schutzrahmen dann z.B., dass bei einem an sich bekannten Stopfprozess des Schotterbettes die Messvorrichtung beschädigt wird. Der Schutzrahmen kann z.B. aus Stahl bestehen oder zumindest eine Schicht aus Stahl aufweisen. Im Querschnitt gesehen kann der Schutzrahmen z.B. ein U-förmiges oder ein L-förmiges Profil aufweisen, auch Flachstähle sind möglich. Die Wandstärke des Schutzrahmens liegt günstigerweise im Bereich zwischen 0,1mm und 15mm, vorzugsweise zwischen 1mm und 3mm.

Die Messvorrichtung weist in bevorzugten Ausgestaltungsformen zumindest eine Anschlussschnittstelle zum Anschluss der Messsensoren an ein Messgerät zur Aufzeichnung der von den Messsensoren jeweils gemessenen vertikalen Flächenpressung auf. Günstigerweise handelt es sich dabei um ein entsprechend mehrkanaliges Messgerät, welches dazu geeignet ist, auch über einen entsprechenden Zeitraum die jeweils vom jeweiligen Messsensor gemessene vertikale Flächenpressung einzeln aufzuzeichnen. Solche Messgeräte sind an sich bekannt. Die Anschlussschnittstelle kann kabelgebunden aber auch kabellos sein. Zum Schutz der Anschlussschnittstelle und gegebenenfalls auch des daran anschließbaren bzw. angeschlossenen Messgerätes kann die Messvorrichtung einen von entsprechenden Wänden umgebenen Schacht aufweisen. Innerhalb dieses Schachts können die Anschlussschnittstelle und gegebenenfalls auch das Messgerät sowie gegebenenfalls vorhandene Anschlussleitungen gegen mechanische Beeinträchtigung von außen geschützt sein. Die Wände dieses Schachts bestehen günstigerweise aus einem entsprechend stabilen Metall wie z.B. Stahl. Seine Form kann an verschiedenste Einbausituationen angepasst sein. Die Wandstärken dieses Schachts liegen günstigerweise im Bereich von 1mm bis 40mm, vorzugsweise von 5mm bis 15mm. Der Schacht kann von einem verschließbaren Deckel verschlossen sein, so dass bei geöffnetem Deckel der Zugang zur Anschlussschnittstelle bzw. auch zu dem daran angeschlossenen Messgerät gegeben ist. Die Anschlussschnittstelle und gegebenenfalls auch das Messgerät können über entsprechende, heute beim Stand der Technik bekannte, Mittel auslesbar und an entsprechende Auslesegeräte wie z.B. Personalcomputer und dergleichen anschließbar sein.

Die Messsensoren der erfindungsgemäß verwendeten Messvorrichtung sind günstigerweise dazu geeignet, vertikale Flächenpressungen in einem Intervall oder zumindest einem Teil des Intervalls von 0,01 N/mm² bis 200 N/mm² zu messen. Der Messbereich der Messsensoren kann sich also über das gesamte genannte Werteintervall oder auch nur einen Teil davon erstrecken. Die Auflösung der Messvorrichtung in der Horizontalen liegt günstigerweise in einem Bereich zwischen 1mm und 1cm. Die Auflösung der Messvorrichtung in der Horizontalen ergibt sich aus dem Abstand zwischen zwei benachbarten Messsensoren und deren Größe. Die einzelnen Messsensoren können flächig, aber auch mehr oder weniger punktförmig ausgeführt sein. Der Abstand und die Größe der Messsensoren, bzw. der Fläche auf denen ein Messsensor die vertikale Flächenpressung misst, und damit auch die Auflösung in der Horizontalen können an die jeweilige Aufgabenstellung angepasst werden.

Bei erfindungsgemäßen Eisenbahnfahrwegen können die Messvorrichtungen an unterschiedlichen Stellen - oder in anderen Worten in unterschiedlichen Ebenen - unterhalb der Eisenbahnschiene angeordnet werden, um so auch verschiedene Aufgabenstellungen zu lösen. Z.B. kann vorgesehen sein, dass die Eisenbahnschienen auf Eisenbahnschwellen gelagert sind und die Messvorrichtung zwischen zumindest einer der Eisenbahnschienen und zumindest einer der Eisenbahnschwellen angeordnet ist. Genauso gut ist es möglich, dass die Messvorrichtung auf einer von der Eisenbahnschiene abgewandten Unterseite der Eisenbahnschwelle angeordnet ist. In diesem Fall kann z.B. vorgesehen sein, dass die Messvorrichtung zwischen der Unterseite der Eisenbahnschwelle und einem Schotterbett angeordnet ist. Statt der Eisenbahnschwellen können in entsprechenden Ausgestaltungsformen auch Platten z.B. aus Beton vorgesehen sein, welche die Eisenbahnschienen tragen. Andere Anwendungen bzw. Ausgestaltungsformen eines erfindungsgemäßen Eisenbahnfahrweges können vorsehen, dass die Eisenbahnschienen auf Eisenbahnschwellen und die Eisenbahnschwellen auf einem Schotterbett gelagert sind und die Messvorrichtung unter dem Schotterbett angeordnet ist. In all diesen Ausgestaltungsformen können unterhalb oder oberhalb der Messvorrichtung elastische Zwischenlagen z.B. in Form von Schwellensohlen, Zwischenlagen, Zwischenplatten oder auch Unterschottermatten vorgesehen sein.

Anhand der beigelegten Figuren wird in der nachfolgenden Figurenbeschreibung auf verschiedene Beispiele für die Ausbildung eines erfindungsgemäßen Eisenbahnfahrweges eingegangen, um so weitere Merkmale und Einzelheiten bevorzugter Ausgestaltungsformen der Erfindung zu erläutern. Es zeigen:
- Fig. 1: eine erste Ausführungsvariante eines erfindungsgemäßen Eisenbahnfahrwegs, bei der die Messvorrichtung unter einer Eisenbahnschwelle angeordnet ist;
- Fig. 1a: den Bereich A aus Fig. 1 vergrößert;
- Fig. 2: eine schematisierte Darstellung des matten- oder plattenförmigen Trägerköpers;
- Fig. 3: eine Darstellung zur Erläuterung von alternativen Varianten der Ausführungsform gemäß Fig. 1;
- Fig. 4: eine Darstellung zur Erläuterung von Möglichkeiten zur Ausgestaltung von Schächten zum Anschluss von Messgeräten;
- Fig. 5: eine Ansicht von unten auf die Eisenbahnschwelle gemäß Fig. 1;
- Fig. 6: ein Ausführungsbeispiel eines erfindungsgemäßen Eisenbahnfahrwegs, bei dem die Messvorrichtung zwischen Eisenbahnschiene und Eisenbahnschwelle angeordnet ist;
- Fig. 7: ein weiteres Ausführungsbeispiel eines erfindungsgemäßen Eisenbahnfahrweges, bei dem die Messvorrichtung zwischen der Eisenbahnschiene und der Eisenbahnschwelle angeordnet ist;
- Fig. 8: eine Ausführungsvariante der Erfindung, bei der die Messvorrichtung unter einem Schotterbett angeordnet ist.

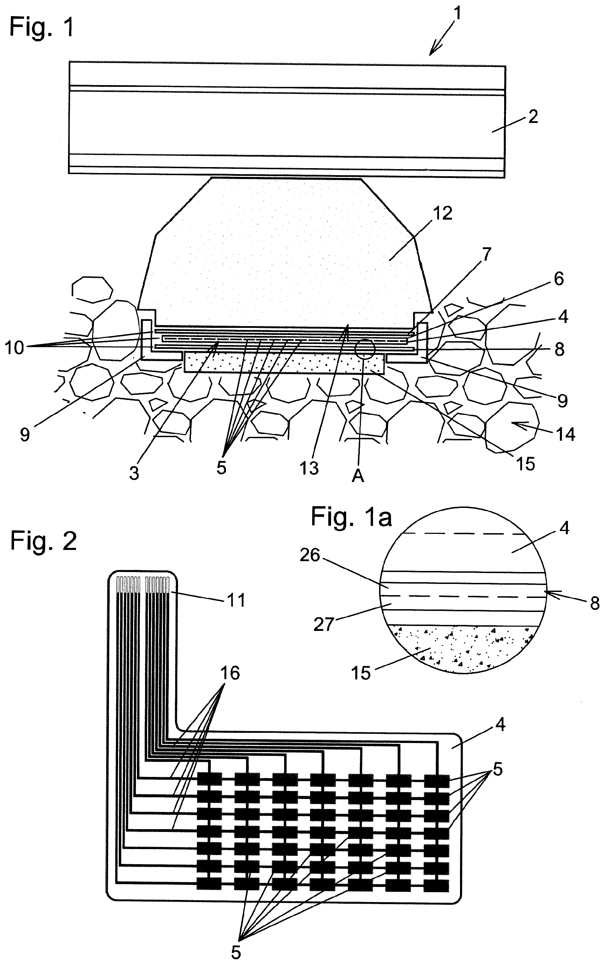

In Fig. 1 ist schematisiert ein Eisenbahnfahrweg 1 gemäß eines ersten Ausführungsbeispiels der Erfindung in einem Vertikalschnitt dargestellt. Zu sehen ist eine der Eisenbahnschienen 2, welche auf einer der Eisenbahnschwellen 12 gelagert ist. Die Befestigung der Eisenbahnschiene 2 auf der Eisenbahnschwelle 12 erfolgt in an sich bekannter Art und Weise und ist hier nicht dargestellt.

Die hier zu sehende Eisenbahnschwelle 12 lagert in einem an sich bekannten Schotterbett 14, von dem hier lediglich die den Schwellenfuß umgebenden Schotterkörner dargestellt sind.

Im Ausführungsbeispiel gemäß Fig. 1 befindet sich die Messvorrichtung 3 zur Messung von vertikaler Flächenpressung direkt unterhalb der Eisenbahnschwelle 12. Die Messvorrichtung 3 ist in diesem Ausführungsbeispiel dadurch im Schotterbett 14 angeordnet. Die Messvorrichtung 3 weist erfindungsgemäß einen matten- oder plattenförmigen Trägerkörper 4 mit einer Vielzahl von voneinander distanziert angeordneten Messsensoren 5 zur Messung der jeweiligen vertikalen Flächenpressung an der Position des jeweiligen Messsensors 5 auf. Die Messsensoren 5 sind flächig, hier in der Horizontalen, über den Trägerkörper 4 verteilt angeordnet, sodass die jeweilige vertikale Flächenpressung selektiv an der jeweiligen Position des jeweiligen Messsensors 5 gemessen werden kann. Direkt oberhalb und unterhalb des Trägerkörpers 4 und der Messsensoren 5 ist in diesem Ausführungsbeispiel eine Gleitschicht 6 der Messvorrichtung 3 zur Entkopplung von horizontalen Querkräften bei der Messung der vertikalen Flächenpressung vorgesehen. Diese Gleitschicht 6 hat, wie eingangs erläutert, günstigerweise einen Reibungskoeffizient relativ zu den Messsensoren 5 von 0,5 oder kleiner. Sie sorgt dafür, dass horizontale Querkräfte nicht auf die Messsensoren 5 übertragen werden und damit auch nicht die Messung der vertikalen Flächenpressung stören. Im gezeigten Ausführungsbeispiel ist die Gleitschicht 6 als eine Hülle ausgebildet, welche den Trägerkörper 4 und die Messsensoren 5 vollständig umgibt. Es kann sich z.B. um eine entsprechend ausgeformte PTFE-Folie, welche gegebenenfalls faserverstärkt sein kann, handeln.

In Fig. 1 sieht man auch die auf den zwei einander gegenüberliegenden Seiten des Trägerkörpers 4 angeordneten, die Messvorrichtung 3 nach außen abschließenden Schutzplatten 7 und 8. Die Schutzplatte 7 liegt direkt an der Unterseite 13 der Eisenbahnschwelle 12 an. Sie dient als Grundplatte bzw. Basis gegenüber der die vertikalen Flächenpressungen an den jeweiligen Positionen durch die jeweiligen Messsensoren 5 gemessen werden. Zu möglichen Ausgestaltungsformen einer solchen als Basis bzw. Grundplatte dienenden Schutzplatte 7 wird auf die eingangs bereits erläuterten verschiedenen Möglichkeiten verwiesen. Die auf der dazu gegenüberliegenden Seite, also unterhalb des Trägerkörpers 4 und der Gleitschicht 6 angeordnete Schutzplatte 8 hat die Funktion einer Schutzschicht, welche den Trägerkörper 4 mit seinen Messsensoren 5 vor zu großen Kräften, vor Überlast und insbesondere vor Zerstörung schützen soll. Andererseits muss diese Schutzplatte 8 aber auch so ausgebildet sein, dass sie die Messung der vertikalen Flächenpressung an der jeweiligen Position des jeweiligen Messsensors 5 erlaubt. Eine Schutzplatte 8 die so steif ist, dass sie eine positionsselektive Messung der vertikalen Flächenpressung verhindert, muss vermieden werden. Mögliche Ausgestaltungsformen für eine solche, als Schutzschicht dienende Schutzplatte 8, auf der Seite, auf der die vertikalen Flächenpressungen in die Messvorrichtung 3 eingetragen werden, sind eingangs bereits erläutert, sodass hierauf verwiesen wird. Diese Schutzplatte 8 ist mehrschichtig aufgebaut, wie eingangs erläutert, mit einer Schicht aus Stahl und einer Schicht aus Kupfer oder einem anderen duktilen Metall. Fig. 1a zeigt den Bereich A aus Fig. 1 vergrößert. Dort ist gut zu sehen, dass die Schutzplatte 8 die Schicht aus duktilem Metall 26 aufweist, welche dem Trägerkörper 4 zugewandt ist. Gut zu sehen ist auch der Stahl 27 bzw. die Schicht aus Stahl 27, welche der Seite zugewandt ist, auf der die vertikalen Flächenpressungen, hier die des Schotters des Schotterbetts 14, in die Messvorrichtung 3 eingetragen werden.

Um Beschädigungen der Messvorrichtung 3, insbesondere an den Stirnflächen 10 der Schutzplatten 7 und 8 und des Trägerkörpers 4 zu verhindern, ist in diesem Ausführungsbeispiel ein um die Schutzplatten 7 und 8 und den Trägerkörper 4 randlich umlaufender Schutzrahmen 9 vorgesehen. In Fig. 1 ist dieser im Querschnitt L-förmig ausgebildet. Dieser Schutzrahmen 9 verhindert insbesondere beim an sich bekannten Stopfen des Schotterbetts 14 eine Beschädigung der Messvorrichtung 3. Unterhalb der Messvorrichtung 3 und insbesondere ihrer Schutzplatte 8 befindet sich in Fig. 1 eine an sich bekannte ein- oder mehrschichtig aufgebaute elastomere Schwellensohle 15. Unterschiedlichste Ausgestaltungsformen von solchen Schwellensohlen sind beim Stand der Technik bekannt und können hier zum Einsatz kommen. Die Schwellensohlen 15 haben einerseits elastische dämpfende Eigenschaften um Vibrationen zu dämpfen. Andererseits haben solche Schwellensohlen 15 günstigerweise auch plastische Eigenschaften, um den Schotter des Schotterbetts 14 möglichst in Position unter der Eisenbahnschwelle 12 zu halten. Die Schwellensohle 15 ist optional. Sie kann also vorhanden sein oder auch nicht.

Mit der Messvorrichtung 3 kann in diesem ersten Ausführungsbeispiel der Erfindung gemäß Fig. 1 eine räumliche und zeitliche Messung der Lage der Kontaktflächen zwischen der Unterseite 13 der Eisenbahnschwelle 12 und den Schotterkörnern des Schotterbetts 14 gemessen werden. Hierbei liefert jeder Messsensor 5 einen für die Position dieses Messsensors 5 individuellen Messwert der vertikalen Flächenpressung. Hierdurch kann die Lage und Ausdehnung der Kontaktflächen zwischen den Körnern des Schotterbetts 14 und der Unterseite der Eisenbahnschwelle 12 in der Fläche aufgelöst messtechnisch erfasst werden. Misst man die vertikalen Flächenpressungen an den einzelnen Positionen des jeweiligen Messsensors 5 über einen längeren Zeitraum, so können so auch durch Umlagerungs- und/oder Setzungsprozesse erfolgende Umlagerungen der Schotterkörner im Schotterbett 14 und damit Verschiebungen und Veränderungen der Kontaktflächen gemessen und überwacht werden. Weiters ist es auch möglich, die Wirkung einer Schwellensohle 15 messtechnisch zu erfassen und zu quantifizieren, indem man Messungen, bei denen die Schwellensohle 15 vorhanden ist, mit Messungen vergleicht, bei denen auf die Schwellensohle 15 verzichtet wurde. Es kann so mit dem erfindungsgemäßen Eisenbahnfahrweg 1 auch die Wirkung verschiedener Arten von Schwellensohlen 15 messtechnisch untersucht werden.

Fig. 2 zeigt schematisiert eine Draufsicht auf einen Trägerkörper 4 mit einer Vielzahl von voneinander distanziert angeordneten Messsensoren 5 zur Messung der jeweiligen vertikalen Flächenpressung an der Position des jeweiligen Messsensors 5. Die Größe, Anzahl und Anordnung der Messsensoren 5 auf dem Trägerkörper 4 kann an die jeweilige Messaufgabe angepasst werden. Durch entsprechende Größe und Beabstandung und Anzahl der Messsensoren 5 kann die gewünschte Auflösung in der Horizontalen erreicht werden. Sie liegt günstigerweise in dem eingangs bereits genannten Bereich von 1mm bis 1cm. Die Messsensoren 5 sollten dazu geeignet sein, vertikale Flächenpressungen in einem Intervall oder zumindest einem Teil des Intervalls von 0,01 N/mm² bis 200 N/mm² zu messen. Die entsprechend angeordneten Messsensoren 5 sind jedenfalls in an sich bekannter Art und Weise mit Anschlussleitungen 16 an die Anschlussschnittstelle 11 angeschlossen. An diese Anschlussschnittstelle 11 kann ein entsprechendes Messgerät direkt oder indirekt angeschlossen werden, um die mittels der Messsensoren 5 an der jeweiligen Position gemessenen vertikalen Flächenpressungen aufzuzeichnen, weiterzugeben oder in anderer Art und Weise zu verarbeiten. Die Anschlussschnittstelle 11 kann kabellos oder als Kabelverbindung ausgeführt sein. Entsprechend an die Anschlussschnittstelle 11 anschließbare Messgeräte 17 sind beim Stand der Technik bekannt. Der Trägerkörper 4 kann flexibel als Matte oder in sich starr als Platte ausgeführt sein.

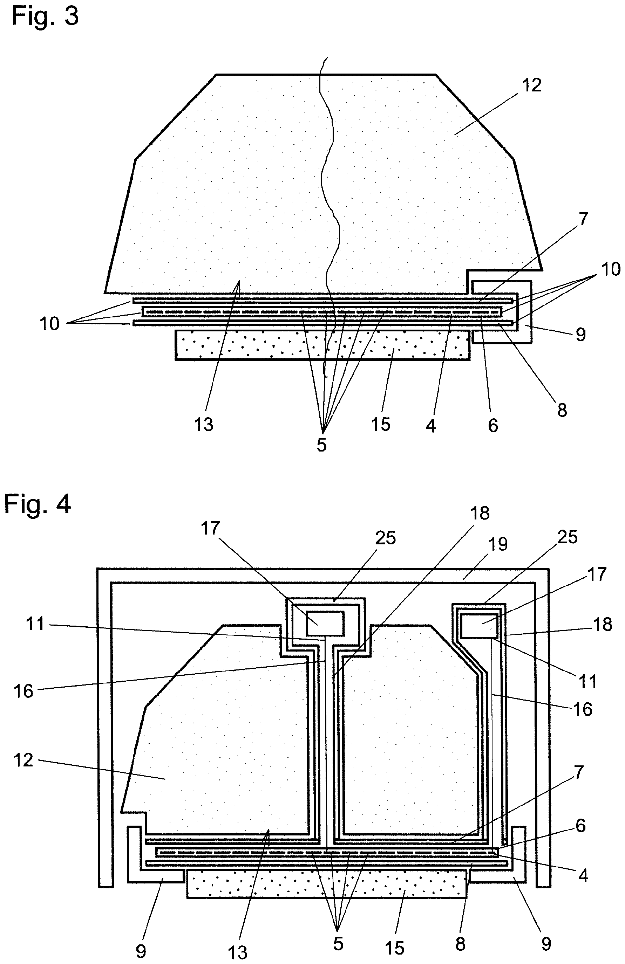

In Fig. 3 sind Varianten des Ausführungsbeispiels aus Fig. 1 dargestellt, wobei allerdings nur die Eisenbahnschwelle 12 mit der darunter angeordneten Messvorrichtung 3 gezeigt ist. Auf der linken Seite der Fig.3 ist eine Variante angedeutet, bei der kein Schutzrahmen 9 vorhanden ist. Auf der rechten Seite der Fig. 3 ist ein Schutzrahmen 9, welcher die Stirnflächen 10 der Schutzplatten 7 und 8 und des Trägerkörpers 4 abdeckt, vorgesehen, welcher im Vertikalschnitt ein U-förmiges Profil bildet. Ansonsten gelten die Erläuterungen zu Fig. 1.

In Fig. 4 sind schematisiert verschiedene Varianten gezeigt, wie Schächte 18 an der Eisenbahnschwelle 12 ausgebildet sein können, um die Anschlussleitungen 16 der Messsensoren 5, die Anschlussschnittstelle 11 und das angeschlossene Messgerät 17 vor äußeren Einflüssen zu schützen. Auf die verschiedenen Varianten der Ausgestaltung dieser Schächte 18, welche auch als Kabelschächte bezeichnet werden könnten, wurde eingangs bereits eingegangen. In Fig. 4 ist beispielhaft eine mittig durch die Eisenbahnschwelle 12 hindurchgeführte Variante des Schachtes 18 gezeigt, bei der am oberen Ende des Schachtes auch das Messgerät 17 mit geschützt ist. Als Alternative ist eine randlich, hier auf der rechten Seite angeordnete Variante eines Schachts 18 gezeigt, welche seitlich an der Eisenbahnschwelle 12 angeordnet ist. Auch in dieser Variante ist das Messgerät 17 mit in den Schacht 18 aufgenommen. Bei beiden Varianten ist der Schacht 18 günstigerweise an seinem oberen Ende mittels eines öffenbaren Deckels 25 wieder verschließbar verschlossen, sodass das Messgerät 17 durch diese obere Öffnung bei entsprechend entferntem Deckel 25 an die Anschlussschnittstelle 11 angeschlossen werden und von diesem auch wieder entfernt werden kann. Die Art des Anschlusses wie auch die Art der Ausbildung des Messgerätes 17 kann in verschiedensten beim Stand der Technik an sich bekannten Ausführungsformen erfolgen, sodass hier nicht weiter darauf eingegangen werden muss.

Um einen zusätzlichen Schutz gegen mechanische Beeinflussung bzw. Zerstörung dieser Messmimik zu ermöglichen, kann zusätzlich auch eine über den entsprechenden Bereich der Eisenbahnschwelle 12 und den oder die Schächte 18 übergestülpte Schutzhaube 19 vorhanden sein. Diese kann z.B. mit Betonankern an der Schwelle gesichert sein. Günstige Ausführungsformen sehen jedenfalls vor, dass die Schutzhaube 19 abnehmbar ausgestaltet ist. Das Schotterbett 14 und die Eisenbahnschiene 2 sind auch in Fig. 4 nicht dargestellt. Bei Fig. 4 handelt es sich aber ebenfalls um eine Variante des Ausführungsbeispiels gemäß Fig. 1, sodass unter Verweis auf die entsprechenden Ausführungen weiter oben auf weitere Erläuterungen hierzu verzichtet werden kann.

Die Schächte 18 und die Schutzhaube 19 sind günstigerweise wasserdicht ausgeführt. Sie können durch miteinander Verschweißen von entsprechenden Metallteilen oder durch Verkleben hergestellt werden. Die einzelnen Elemente können natürlich aber auch verschraubt, vernietet und zur Herstellung der benötigten Wasserdichtigkeit mit diversen Dichtmassen ausgestattet sein. All dies kann an den jeweiligen Anwendungsfall angepasst sein.

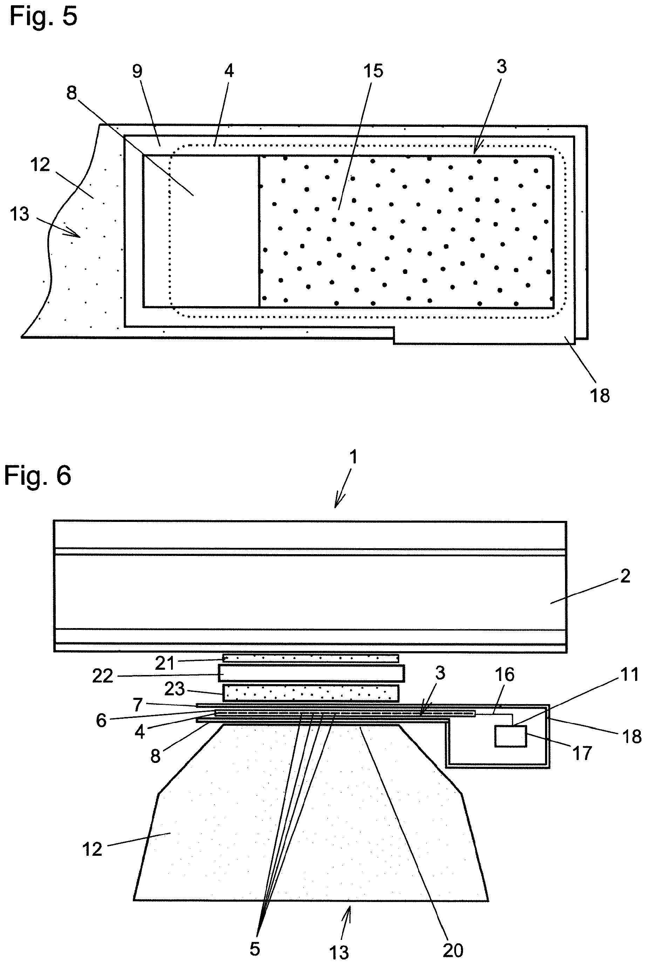

Fig. 5 zeigt eine schematisierte Ansicht von unten auf die Unterseite 13 der Eisenbahnschwelle 12 aus Fig. 1 in dem Bereich, in dem die Messvorrichtung 3 angeordnet ist. Zu sehen sind der Schutzrahmen 9 sowie in einem Teilbereich auch die untere Schutzplatte 8 mit der teilflächig darauf angeordneten Schwellensohle 15. Die Schwellensohle 15 kann teilflächig, vollflächig oder, wie eingangs bereits erläutert, gar nicht unter der Messvorrichtung 3 bzw. der Eisenbahnschwelle 12 angeordnet sein. In Fig. 5 ist eine teilflächige Anordnung der Schwellensohle 15 gezeigt, sodass ein Teil der Schutzplatte 8 frei bleibt. Ein solcher Aufbau kann z.B. direkt dazu verwendet werden, die Wirkung der Schwellensohle 15 mit dem Nichtvorhandensein der Schwellensohle 15 zu vergleichen. Die Erstreckung des Trägerkörpers 4 ist in Fig. 5 strichliert eingezeichnet. Die Messvorrichtung 3 kann sich vollflächig über die gesamte Unterseite 13 der Eisenbahnschwelle 12 erstrecken oder auch nur in Teilbereichen der Unterseite 13 der Eisenbahnschwelle 12 ausgeführt sein, so wie dies in Fig. 5 beispielhaft gezeigt ist.

Fig. 6 zeigt eine Variante bei der die Messvorrichtung 3 zwischen der Eisenbahnschiene 2 und der Eisenbahnschwelle 12 angeordnet ist. In der Variante gemäß Fig. 6 liegt die Messvorrichtung 3 unmittelbar auf der Oberseite 20 der Eisenbahnschwelle 12 auf. Zwischen der Eisenbahnschiene 2 und der oberen Schutzplatte 7 der Messvorrichtung 3 befindet sich in diesem Ausführungsbeispiel eine Schichtabfolge bestehend aus einer elastomeren Zwischenlage 21, einer in sich steifen Rippenplatte 22 und einer wiederum elastomeren Zwischenplatte 23. Abgesehen von der Tatsache, dass in diesem Ausführungsbeispiel kein Schutzrahmen 9 vorhanden ist, kann die Messvorrichtung 3 dieses Ausführungsbeispiels analog zum ersten Ausführungsbeispiel ausgebildet sein, sodass auf diese Schilderungen hierzu verwiesen wird. Dies gilt auch für den Schacht 18 mit dem Messgerät 17, welches über die Anschlussschnittstelle 11 und die Anschlussleitungen 16 an die auf dem Trägerkörper 4 angeordneten Messsensoren 5 angeschlossen ist.

Mit der in Fig. 6 gezeigten Variante können an der jeweiligen Position der Vielzahl von Messsensoren 5 jeweils die vertikalen Flächenpressungen gemessen werden. Hierdurch kann abgebildet werden, wie die vertikalen Lasten, welche die Eisenbahnschiene 2 in die Eisenbahnschwelle 12 einträgt, in der Fläche verteilt sind. Über eine entsprechende Messung über einen längeren Zeitraum können Änderungen in dieser Auflastverteilung überwacht und nachgewiesen werden. Der Aufbau kann auch dazu verwendet werden, die Wirkung der elastomeren Zwischenschichten, hier in Form der Zwischenlage 21 und der Zwischenplatte 23, messtechnisch zu erfassen. Durch Anordnung verschiedener Arten von elastischen Zwischenlagen 21 oder -platten 23 kann deren Wirkung beim Lasteintrag von der Eisenbahnschiene 2 in die Eisenbahnschwelle 12 gemessen und in der Fläche aufgelöst dargestellt werden. Die Auflösung dieser Messung in der Horizontalen kann durch entsprechende Größe und Beabstandung der Messsensoren 5 auf dem Trägerkörper 4 der jeweiligen Messaufgabe angepasst werden.

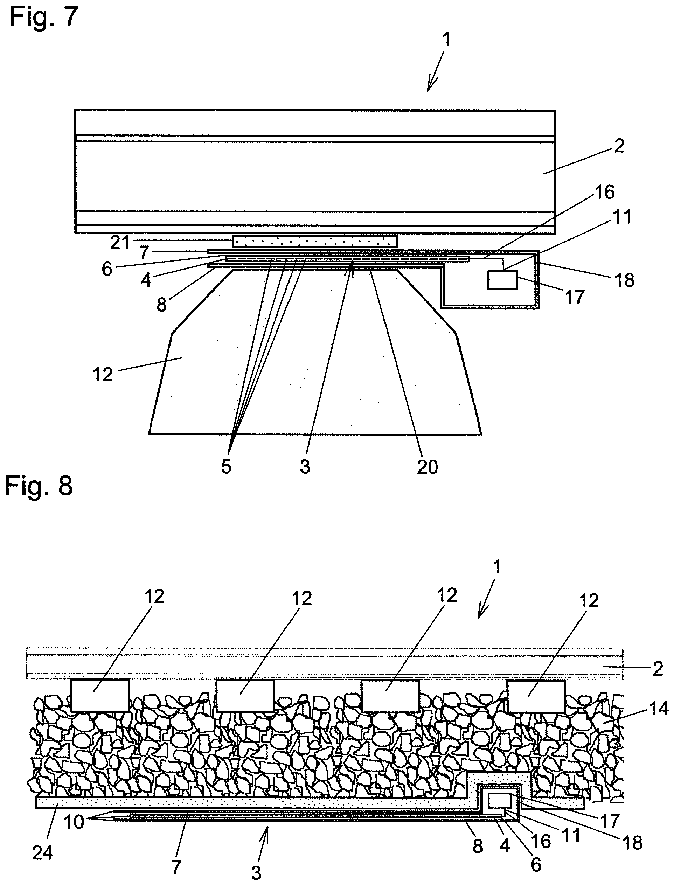

Fig. 7 zeigt eine zu Fig. 6 ähnliche Variante, bei der anstelle der Abfolge der Zwischenlage 21, der Rippenplatte 22 und der Zwischenplatte 23 nur die Zwischenlage 21 zwischen der Messvorrichtung 3 und der Eisenbahnschiene 2 angeordnet ist. Natürlich kann auch vollständig auf Zwischenlagen 21 und Zwischenplatten 23 sowie Rippenplatten 22 verzichtet werden. Die Befestigung der Eisenbahnschiene 2 auf den Eisenbahnschwelle 12 ist in den Fig. 6 und 7 nicht dargestellt. Sie kann wie beim Stand der Technik bekannt ausgeführt sein.

Fig. 8 zeigt eine erfindungsgemäße Ausgestaltungsform eines Eisenbahnfahrwegs 1, bei der die Eisenbahnschienen 2 auf Eisenbahnschwellen 12 und die Eisenbahnschwellen 12 auf einem Schotterbett 14 gelagert sind und die Messvorrichtung 3 unter dem Schotterbett 14 angeordnet ist. In der gezeigten Variante gemäß Fig. 8 ist zwischen dem Schotterbett 14 und der Messvorrichtung 3 eine elastomere Unterschottermatte 24 angeordnet. Auf diese kann aber auch verzichtet werden. Die Messvorrichtung 3 ist grundsätzlich so wie im ersten Ausführungsbeispiel gemäß Fig. 1 und 2 erläutert ausgeführt. Auf den Schutzrahmen 9 wurde in Fig. 8 allerdings verzichtet. Die Anzahl, Größe und Verteilung der Messsensoren 5 auf dem Trägerkörper 4 der Messvorrichtung 3 kann ebenso wie die Größe des Trägerkörpers 4 und damit die Größe der Messvorrichtung 3 an die jeweilige Messaufgabe angepasst werden. Auch in dieser Variante gemäß Fig. 8 können an der jeweiligen Position des jeweiligen Messsensors 5 die jeweiligen vertikalen Flächenpressungen gemessen werden, sodass die auf den Untergrund einwirkenden Auflasten des Eisenbahnfahrwegs 1 in der Horizontalen bzw. in der Fläche aufgelöst gemessen und dargestellt werden können. Auch hier ist es durch die Messung über einen längeren Zeitraum möglich, zeitliche Veränderungen in der Lage, Anzahl und/oder Größe der Lasteintragungspunkte zu messen und zu überwachen. Darüber hinaus kann auf diese Art und Weise auch die Wirkung verschieden ausgebildeter Unterschottermatten 24 messtechnisch erfasst und quantifiziert werden.

Die verschiedenen Ausführungsvarianten, welche in den Figuren beispielhaft gezeigt sind, veranschaulichen, dass erfindungsgemäße Eisenbahnfahrwege 1 sehr unterschiedlich ausgebildet sein können. Die gilt insbesondere für die Frage, wo die Messvorrichtung 3 unterhalb der Eisenbahnschiene 2 angeordnet ist. Es ist mit erfindungsgemäßen Eisenbahnfahrwegen 1 also möglich, in der Horizontalen bzw. in der Fläche aufgelöst den Eintrag von vertikalen Flächenpressungen zu messen und auch entsprechende Veränderungen mit der Zeit messtechnisch zu erfassen. Darüber hinaus ermöglichen es erfindungsgemäße Eisenbahnfahrwege 1 die Wirkung verschiedener elastomerer Zwischenschichten wie z.B. der hier in den verschiedenen Ausführungsbeispielen verwendeten Zwischenlagen 21, Zwischenplatten 23, Schwellensohlen 15 und Unterschottermatten 24 messtechnisch zu erfassen und darzustellen. Anstelle der Eisenbahnschwellen 12 können die Eisenbahnschienen 2 bei erfindungsgemäßen Eisenbahnfahrwegen 1 auch auf Platten z.B. aus Beton oder anderen Unterlagen gelagert sein. Auch in solchen Ausgestaltungsformen können erfindungsgemäße Messvorrichtungen 3 zur Lösung unterschiedlichster Messaufgaben verwendet werden.

Abschließend wird noch darauf hingewiesen, dass entsprechende Messvorrichtungen 3 mit zumindest einem mattenförmigen oder plattenförmigen Trägerkörper 4 mit einer Vielzahl von voneinander distanziert angeordneten Messsensoren 5 zur Messung der jeweiligen Flächenpressung an der Position des jeweiligen Messsensors 5 nicht nur bei Eisenbahnfahrwegen 1 eingesetzt werden können. Es ist vielmehr möglich, mit solchen Messvorrichtungen 3 auch vertikale Flächenpressungen und die flächige Verteilung dieser vertikalen Flächenpressungen in Gebäuden und insbesondere unter Elastomerlagen in Gebäuden zu messen. Solche Messungen können z.B. zwischen Wänden, Decken und Böden oder bei einzelnen Punktlagern oder in anderen Anwendungsfällen im Baubereich erfolgen. Im Bahnbereich können solche Messvorrichtungen 3 in entsprechend angepassten Ausgestaltungsformen auch bei Masse-Feder-Systemen, insbesondere wiederum unter und/oder über Elastomerlagen, eingesetzt werden.

### Legende zu den Hinweisziffern:

- 1: Eisenbahnfahrweg
- 2: Eisenbahnschiene
- 3: Messvorrichtung
- 4: Trägerkörper
- 5: Messsensor
- 6: Gleitschicht
- 7: Schutzplatte
- 8: Schutzplatte
- 9: Schutzrahmen
- 10: Stirnfläche
- 11: Anschlussschnittstelle
- 12: Eisenbahnschwelle
- 13: Unterseite
- 14: Schotterbett
- 15: Schwellensohle
- 16: Anschlussleitung
- 17: Messgerät
- 18: Schacht
- 19: Schutzhaube
- 20: Oberseite
- 21: Zwischenlage
- 22: Rippenplatte
- 23: Zwischenplatte
- 24: Unterschottermatte
- 25: Deckel
- 26: duktiles Metall
- 27: Stahl

## Patentansprüche

1. Eisenbahnfahrweg (1) mit zumindest zwei Eisenbahnschienen (2) und zumindest einer, unterhalb zumindest einer der Eisenbahnschienen (2) angeordneten Messvorrichtung (3) zur Messung von vertikaler Flächenpressung, wobei die Messvorrichtung (3) zumindest einen mattenförmigen oder plattenförmigen Trägerkörper (4) mit einer Vielzahl von voneinander distanziert angeordneten Messsensoren (5) zur Messung der jeweiligen vertikalen Flächenpressung an der Position des jeweiligen Messsensors (5) aufweist, und die Messvorrichtung (3) auf zumindest einer Seite des Trägerkörpers (4) von einer, die Messvorrichtung (3) nach außen abschließenden, mehrschichtigen Schutzplatte (8) begrenzt ist, **dadurch gekennzeichnet, dass** bei der mehrschichtigen Schutzplatte (8) ein Stahl (27) der Seite zugewandt ist, auf der die vertikalen Flächenpressungen in die Messvorrichtung (3) eingetragen werden, und die Schutzplatte (8) weiters eine Schicht aus einem weicheren duktilen Metall (26) aufweist, welche dem Trägerkörper (4) zugewandt ist.

2. Eisenbahnfahrweg (1) nach Anspruch 1, **dadurch gekennzeichnet, dass**, vorzugsweise direkt, oberhalb und/oder unterhalb des Trägerkörpers (4) und der Messsensoren (5) zumindest eine Gleitschicht (6) der Messvorrichtung (3) zur Entkopplung von horizontalen Querkräften bei der Messung der vertikalen Flächenpressung angeordnet ist, wobei vorzugsweise vorgesehen ist, dass ein Reibungskoeffizient zwischen einem jeweiligen der Messsensoren (5) und der Gleitschicht (6) 0,5 oder kleiner, vorzugsweise 0,1 oder kleiner, ist.

3. Eisenbahnfahrweg (1) nach Anspruch 1 oder 2, **dadurch gekennzeichnet, dass** die Messvorrichtung (3) auf zwei einander gegenüberliegenden Seiten des Trägerkörpers (4) von jeweils einer, die Messvorrichtung (3) nach außen abschließenden, mehrschichtigen Schutzplatte (7, 8) begrenzt ist.

4. Eisenbahnfahrweg (1) nach Anspruch 2 und 3, **dadurch gekennzeichnet, dass** die Gleitschicht (6), vorzugsweise jeweils, zwischen dem Trägerkörper (4) mit den Messsensoren (5) und der Schutzplatte (7, 8) angeordnet ist.

5. Eisenbahnfahrweg (1) nach einem der Ansprüche 1 bis 4, **dadurch gekennzeichnet, dass** die Messvorrichtung (3) einen um die Schutzplatte (7, 8), vorzugsweise die Schutzplatten (7, 8), und den Trägerkörper (4) randlich umlaufenden Schutzrahmen (9) aufweist, welcher Stirnflächen (10) der Schutzplatte(7, 8), vorzugsweise der Schutzplatten (7, 8), und des Trägerkörpers (4) nach außen hin abdeckt.

6. Eisenbahnfahrweg (1) nach einem der Ansprüche 1 bis 5, **dadurch gekennzeichnet, dass** die Messvorrichtung (3) zumindest eine Anschlussschnittstelle (11) zum Anschluss der Messsensoren (5) an ein Messgerät (17) zur Aufzeichnung der von den Messsensoren (5) jeweils gemessenen vertikalen Flächenpressung aufweist.

7. Eisenbahnfahrweg (1) nach einem der Ansprüche 1 bis 6, **dadurch gekennzeichnet, dass** die Messsensoren (5) dazu geeignet sind, vertikale Flächenpressungen in einem Intervall oder zumindest einem Teil des Intervalls von 0,01 N/mm² bis 200 N/mm² zu messen.

8. Eisenbahnfahrweg (1) nach einem der Ansprüche 1 bis 7, **dadurch gekennzeichnet, dass** die Auflösung der Messvorrichtung (3) in der Horizontalen in einem Bereich von 1 mm bis 1 cm liegt.

9. Eisenbahnfahrweg (1) nach einem der Ansprüche 1 bis 8, **dadurch gekennzeichnet, dass** die Eisenbahnschienen (2) auf Eisenbahnschwellen (12) gelagert sind und die Messvorrichtung (3) zwischen zumindest einer der Eisenbahnschienen (2) und zumindest einer der Eisenbahnschwellen (12) und/oder auf einer, von der Eisenbahnschiene (2) abgewandten Unterseite (13) der Eisenbahnschwelle (12) angeordnet ist.

10. Eisenbahnfahrweg (1) nach einem der Ansprüche 1 bis 8, **dadurch gekennzeichnet, dass** die Eisenbahnschienen (2) auf Eisenbahnschwellen (12) und die Eisenbahnschwellen (12) auf einem Schotterbett (14) gelagert sind und die Messvorrichtung (3) unter dem Schotterbett (14) angeordnet ist.

## Claims

1. Railway track (1), comprising at least two railway rails (2) and at least one measuring apparatus (3) arranged beneath at least one of the railway rails (2) for measuring vertical surface pressure, wherein the measuring apparatus (3) has at least one mat-shaped or panel-shaped carrier body (4) with a plurality'of spaced-apart measuring sensors (5) arranged thereon for measuring the respective vertical surface pressure at the position of the respective measuring sensor (5), and the measuring apparatus (3) is bounded on at least one side of the carrier body (4) by a multilayer protective panel (8) which closes off the measuring apparatus (3) with respect to the outside, **characterized in that**, in the multilayer protective panel (8), a steel (27) faces towards the side on which the vertical surface pressures are input into the measuring apparatus (3), and the protective panel (8) additionally has a layer made of a softer ductile metal (26), which faces towards the carrier body (4).

2. Railway track (1) according to claim 1, **characterized in that** at least one sliding layer (6) of the measuring apparatus (3) is arranged, preferably directly, above and/or below the carrier body (4) and the measuring sensors (5) in order to decouple horizontal transverse forces when measuring the vertical surface pressure, wherein it is preferably provided that a coefficient of friction between each of the measuring sensors (5) and the sliding layer (6) is 0.5 or less, preferably 0.1 or less.

3. Railway track (1) according to claim 1 or 2, **characterized in that** the measuring apparatus (3) is bounded on two opposite sides of the carrier body (4) by a respective multilayer protective panel (7, 8) which closes off the measuring apparatus (3) with respect to the outside.

4. Railway track (1) according to claim 2 and 3, **characterized in that** the sliding layer (6), preferably each sliding layer, is arranged between the carrier body (4) with the measuring sensors (5) and the protective panel (7, 8).

5. Railway track (1) according to any one of claims 1 to 4, **characterized in that** the measuring apparatus (3) has a protective frame (9) which runs around the edge of the protective panel (7, 8), preferably the protective panels (7, 8), and the carrier body (4), the protective frame covering end faces (10) of the protective panel (7, 8), preferably of the protective panels (7, 8), and of the carrier body (4) with respect to the outside.

6. Railway track (1) according to any one of claims 1 to 5, **characterized in that** the measuring apparatus (3) has at least one connection interface (11) for connecting the measuring sensors (5) to a measuring unit (17) for recording the vertical surface pressure measured by each of the measuring sensors (5).

7. Railway track (1) according to any one of claims 1 to 6, **characterized in that** the measuring sensors (5) are suitable for measuring vertical surface pressures in a range or in at least part of the range from 0.01 N/mm² to 200 N/mm².

8. Railway track (1) according to any one of claims 1 to 7, **characterized in that** the resolution of the measuring apparatus (3) in the horizontal lies in a range from 1 mm to 1 cm.

9. Railway track (1) according to any one of claims 1 to 8, **characterized in that** the railway rails (2) are mounted on railway sleepers (12), and the measuring apparatus (3) is arranged between at least one of the railway rails (2) and at least one of the railway sleepers (12) and/or on an underside (13) of the railway sleeper (12) facing away from the railway rail (2).

10. Railway track (1) according to any one of claims 1 to 8, **characterized in that** the railway rails (2) are mounted on railway sleepers (12), and the railway sleepers (12) are mounted on a ballast bed (14), and the measuring apparatus (3) is arranged beneath the ballast bed (14).

## Revendications

1. Voie ferrée (1) avec au moins deux rails de chemin de fer (2) et au moins un dispositif de mesure (3) disposé sous au moins l'un des rails de chemin de fer (2) pour mesurer une pression de surface verticale, le dispositif de mesure (3) présentant au moins un corps de support (4) en forme de tapis ou de plaque avec une pluralité de capteurs de mesure (5) disposés à distance les uns des autres pour mesurer la pression de surface verticale correspondant à la position de chaque capteur de mesure (5), et le dispositif de mesure (3) est délimité sur au moins un côté du corps de support (4) par une plaque de protection multicouche (8) fermant le dispositif de mesure (3) vers l'extérieur, **caractérisé en ce que**, dans la plaque de protection multicouche (8), un acier (27) est tourné vers le côté sur lequel les pressions de surface verticales sont appliquées dans le dispositif de mesure (3), et la plaque de protection (8) présente en outre une couche d'un métal ductile plus mou (26), qui est tournée vers le corps de support (4).

2. Voie ferrée (1) selon la revendication 1, **caractérisée en ce qu'**au moins une couche de glissement (6) du dispositif de mesure (3) est disposée, de préférence directement, au-dessus et/ou au-dessous du corps de support (4) et des capteurs de mesure (5) pour le découplage de forces transversales horizontales lors de la mesure de la pression de surface verticale, de préférence en prévoyant qu'un coefficient de frottement entre l'un des capteurs de mesure (5) et la couche de glissement (6) vaut 0,5 ou moins, de préférence vaut 0,1 ou moins.

3. Voie ferrée (1) selon la revendication 1 ou 2, **caractérisée en ce que** le dispositif de mesure (3) est délimité sur deux côtés opposés du corps de support (4) par une plaque de protection multicouche (7, 8) qui ferme le dispositif de mesure (3) vers l'extérieur.

4. Voie ferrée (1) selon les revendications 2 et 3, **caractérisée en ce que** la couche de glissement (6) est disposée entre le corps de support (4) avec les capteurs de mesure (5) et la plaque de protection (7, 8), de préférence chaque plaque de protection.

5. Voie ferrée (1) selon l'une des revendications 1 à 4, **caractérisée en ce que** le dispositif de mesure (3) présente un cadre de protection (9) entourant le bord de la plaque de protection (7, 8), de préférence le bord des plaques de protection (7, 8), et le corps de support (4), lequel cadre recouvre vers l'extérieur les faces frontales (10) de la plaque de protection (7, 8), de préférence des plaques de protection (7, 8), et du corps de support (4).

6. Voie ferrée (1) selon l'une des revendications 1 à 5, **caractérisée en ce que** le dispositif de mesure (3) présente au moins une interface de raccordement (11) pour le raccordement des capteurs de mesure (5) à un appareil de mesure (17) pour l'enregistrement de la pression de surface verticale mesurée par chaque capteur de mesure (5).

7. Voie ferrée (1) selon l'une des revendications 1 à 6, **caractérisée en ce que** les capteurs de mesure (5) sont adaptés pour mesurer des pressions de surface verticales dans un intervalle ou au moins une partie de l'intervalle allant de 0,01 N/mm² à 200 N/mm².

8. Voie ferrée (1) selon l'une quelconque des revendications 1 à 7, **caractérisée en ce que** la résolution du dispositif de mesure (3) à l'horizontale est comprise dans une plage allant de 1 mm à 1 cm.

9. Voie ferrée (1) selon l'une des revendications 1 à 8, **caractérisée en ce que** les rails de chemin de fer (2) sont montés sur des traverses de chemin de fer (12), et le dispositif de mesure (3) est disposé entre au moins l'un des rails de chemin de fer (2) et au moins l'une des traverses de chemin de fer (12) et/ou sur une face inférieure (13) de la traverse de chemin de fer (12) qui est opposée au rail de chemin de fer (2).

10. Voie ferrée (1) selon l'une des revendications 1 à 8, **caractérisée en ce que** les rails de chemin de fer (2) sont posés sur des traverses de chemin de fer (12) et les traverses de chemin de fer (12) sont posées sur un lit de ballast (14), et le dispositif de mesure (3) est disposé sous le lit de ballast (14).
